# EUROPEAN PATENT APPLICATION

(11) **EP 2 512 183 A1**
(43) Date of publication of application: **17.10.2012**
(21) Application number: 10835498.6
(22) Date of filing: 10.12.2010
(51) Int. Cl.: H04W 36/12

(54) **METHOD, APPARATUS AND SYSTEM FOR ACQUIRING AND TRANSMITTING ACCESS INFORMATION**

(30) Priority: 10.12.2009 CN 200910253421
(71) Applicant: Huawei Technologies Co., Ltd., Guangdong 518129 (CN)
(72) Inventor: WEI, Ketai, Shenzhen Guangdong 518129 (CN); ZENG, Wenjie, Shenzhen Guangdong 518129 (CN); ZHANG, Wei, Shenzhen Guangdong 518129 (CN)
(74) Representative: Maiwald Patentanwalts GmbH
(86) International application number: PCT/CN2010/079637
(87) International publication number: WO 2011/069463

(57) **Abstract**

Embodiments of the present invention relate to a method, an apparatus, and a system for obtaining and sending access information. The method includes: sending a context request message to a second serving general packet radio service support node SGSN, where the context request message includes a subscriber identity of a mobile station MS; receiving a context request response message sent by the second SGSN, where the context request response message includes access type information of the MS in the second SGSN, and the access type information of the MS in the second SGSN is obtained by the second SGSN according to the subscriber identity. In embodiments of present invention, the first SGSN may acquire the access type information of the MS in the second SGSN in time, so that the first SGSN may perform subsequent service processing according to the access type information.

## Description

### FIELD OF THE INVENTION

The embodiments of present invention relate to the field of communication technologies, and in particular, to a method, an apparatus, and a system for obtaining and sending access information.

### BACKGROUND OF THE INVENTION

With continuous development of network technologies, networks belonging to different access types have been fully converged, so that a mobile station (Mobile Station, MS for short) may randomly handover between different networks, for example, the MS performs a handover between existing 3G and 2G networks or hands over between networks such as 2G, 3G, and 4G networks in the future.

In the prior art, a serving GPRS support node (Serving General Packet Radio Service Support Node, SGSN for short) after the handover needs to know an access type of the MS under an SGSN before the handover, so as to perform statistics on the number of handovers that are performed by the MS between networks of different access types, and perform network performance measurement, thereby improving network operation efficiency.

Therefore, how the SGSN after the handover obtains the access type of the MS in the SGSN before the handover becomes a problem to be solved.

### SUMMARY OF THE INVENTION

Embodiments of the present invention provide a method, an apparatus, and a system for obtaining and sending access information, so that an SGSN after a handover may obtain access type information in an SGSN before the handover of an MS.

An embodiment of the present invention provides a method for obtaining access information, where the method includes:
sending a context request message to a second serving general packet radio service support node SGSN, where the context request message includes a subscriber identity of a mobile station MS in the second SGSN; and
receiving a context request response message sent by the second SGSN, where the context request response message includes access type information of the MS in the second SGSN, and the access type information of the MS in the second SGSN is obtained by the second SGSN according to the subscriber identity.

An embodiment of the present invention provides a method for sending access information, where the method includes:
receiving a context request message sent by a first serving general packet radio service support node SGSN, where the context request message includes a subscriber identity of a mobile station MS;
obtaining access type information of the MS according to the subscriber identity; and
sending a context request response message to the first SGSN, where the context request response message includes the access type information.

An embodiment of the present invention provides a serving general packet radio service support node SGSN, where the SGSN includes:
a first sending module, configured to send a context request message to a second SGSN, where the context request message includes a subscriber identity of a mobile station MS; and
a first receiving module, configured to receive a context request response message sent by the second SGSN, where the context request response message includes access type information of the MS in the second SGSN, and the access type information of the MS in the second SGSN is obtained by the second SGSN according to the subscriber identity.

An embodiment of the present invention provides another serving general packet radio service support node SGSN, where the SGSN includes:
a second receiving module, configured to receive a context request message sent by a first SGSN, where the context request message includes a subscriber identity of a mobile station MS;
a second processing module, configured to obtain access type information of the MS according to the subscriber identity; and
a second sending module, configured to send a context request response message to the first SGSN, where the context request response message includes the access type information.

An embodiment of the present invention provides a system for processing access information, where the system includes a first serving general packet radio service support node SGSN and a second SGSN, and
the first SGSN is configured to send a context request message to a second SGSN, where the context request message includes a subscriber identity of a mobile station MS; and receive a context request response message sent by the second SGSN, where the context request response message includes access type information of the MS in the second SGSN, and the access type information of the MS in the second SGSN is obtained by the second SGSN according to the subscriber identity; and
the second SGSN is configured to receive the context request message sent by the first SGSN, where the context request message includes the subscriber identity of the MS; obtain the access type information of the MS according to the subscriber identity; and send the context request response message to the first SGSN, where the context request response message includes the access type information.

According to the embodiments of the present invention, the first SGSN, that is, an SGSN that the MS gets access to after the handover, may obtain the access type information of the MS in the old SGSN in time, so that the first SGSN may perform subsequent service processing according to the access type information.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.

FIG. 1 is a flow chart of an embodiment of a method for obtaining access information according to the present invention;

FIG. 2 is a signaling flow chart of another embodiment of a method for obtaining access information according to the present invention;

FIG. 3 is a flow chart of an embodiment of a method for sending access information according to the present invention;

FIG. 4 is a schematic structural diagram of an embodiment of an SGSN according to the present invention;

FIG. 5 is a schematic structural diagram of another embodiment of an SGSN according to the present invention;

FIG. 6 is a schematic structural diagram of still another embodiment of an SGSN according to the present invention; and

FIG. 7 is a schematic structural diagram of an embodiment of a system for processing access information according to the present invention.

### DETAILED DESCRIPTION OF THE EMBODIMENTS

In order to make the objectives, technical solutions, and advantages of the embodiments of the present invention more comprehensible, the technical solutions in the embodiments of the present invention are clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

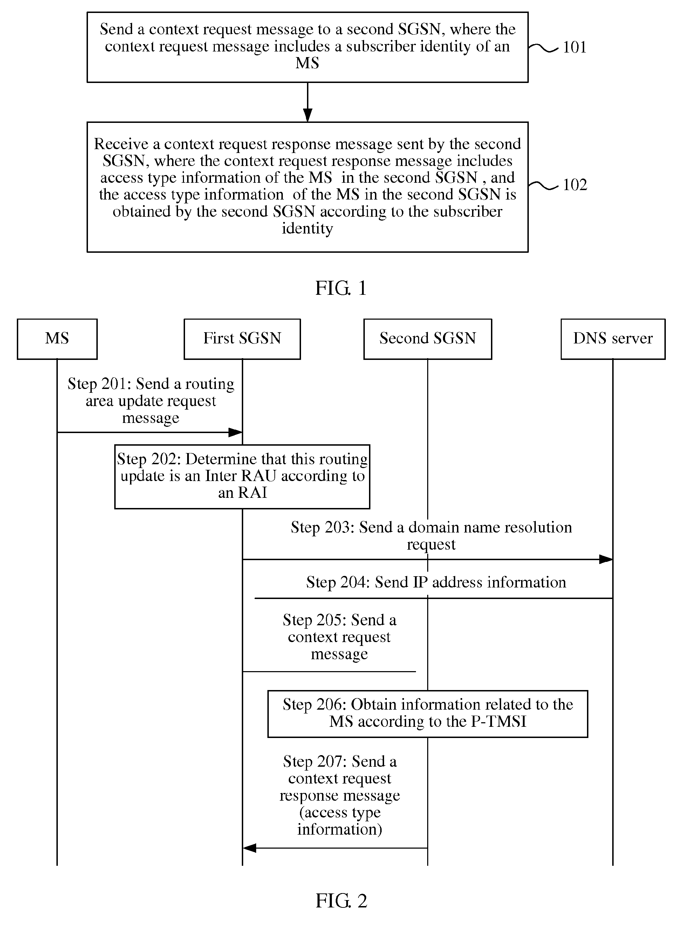

FIG. 1 is a flow chart of an embodiment of a method for obtaining access information according to the present invention. As shown in FIG. 1, the method of this embodiment may include:

Step 101: Send a context request message to a second SGSN, where the context request message includes a subscriber identity of a mobile station MS.

For example, a first SGSN may send the context request message to the second SGSN. Specifically, the first SGSN may be a new SGSN that the MS is to get access to, and the second SGSN is an old SGSN that the MS formerly gets access to. When a tracking area (Route Area, RA for short) of the MS changes and the MS needs to hand over from the second SGSN to the first SGSN, the MS may send a routing area update request message to the first SGSN, and the first SGSN may send the context request message to the second SGSN after receiving the routing area update request message, where the context request message is used to obtain a packet data protocol (Packet Data Protocol, PDP for short) context of the MS and a mobile management (Mobile Management, MM for short) context of the MS. In the context request message, the subscriber identity of the MS, for example, a packet-temporary mobile subscriber identity (packet-temporary mobile subscriber identity, P-TMSI for short), may be included, and in the second SGSN, the subscriber identity uniquely corresponds to the MS.

Step 102: Receive a context request response message sent by the second SGSN, where the context request response message includes access type information of the MS in the second SGSN, and the access type information of the MS in the second SGSN is obtained by the second SGSN according to the subscriber identity.

After receiving the context request message sent by the first SGSN, the second SGSN may, according to the subscriber identity included in the context request message, for example, the P-TMSI, extract the access type information of the MS that corresponds to the P-TMSI, that is, the access type information of the MS in the old SGSN. For example, the access type information may be a GSM/EDGD radio access network (GSM EDGE Radio Access Network, GERAN for short), and may also be a universal terrestrial radio access network (Universal Terrestrial Radio Access Network, UTRAN for short), and so on. Then, the second SGSN may include the obtained access type information of the MS in the second SGSN in the context request response information, and send the context request response information to the first SGSN. Therefore, after receiving the context request response information, the first SGSN may know the access type information of the MS in the second SGSN, and thereby may perform relevant performance measurement according to the access type information, which improves network operation efficiency.

In the method for obtaining access information according to this embodiment, the first SGSN, that is, the SGSN that the MS gets access to after a handover, may obtain the access type information of the MS in the old SGSN in time, so that the first SGSN may perform subsequent service processing according to the access type information.

In another embodiment of the method for obtaining access information according to the present invention, before the sending a context request message to the second SGSN in step 101, the method may further include: receiving a routing area update request message sent by the MS, where the routing area update request message includes the subscriber identity and a routing area identity (Routing Area Identity, RAI for short) in the second SGSN.

Specifically, when the MS detects that a new RA is entered, the MS needs to send the routing area update request message to an SGSN in the new RA, that is, the first SGSN, where the routing update request message may include the subscriber identity, for example, a P-TMSI, and the RAI of the old SGSN, that is, the second SGSN.

Accordingly, the sending a context request message to the second SGSN in step 101 may include: determining that the routing area update request message is an inter-SGSN routing update request message according to the RAI, obtaining address information of the second SGSN through domain name resolution, and sending the context request message to the second SGSN corresponding to the address information of the second SGSN.

Specifically, the first SGSN may judge whether the routing area update is an inter-SGSN routing update according to the RAI included in the routing update request message. For example, the first SGSN may judge whether the RAI is identical with its own RAI, and if the RAI is identical with its own RAI, the SGSN is not handed over in this routing update, that is, this routing update is an Intra RAU; and if the RAI is not identical with its own RAI, the SGSN needs to be handed over in this routing update, that is, this routing is an Inter RAU. If the routing update is an Inter RAU, the routing update request message received by the first SGSN is an inter-SGSN routing update request message, and in this case, the first SGSN may obtain the address information of the second SGSN through domain name resolution, for example, the first SGSN may send a domain name resolution request to a domain name system (Domain Name System, DNS for short), where the domain name resolution request may include the RAI of the second SGSN, for example, RAC0001.LAC1234.MNC0000.MCC0460.GPRS. Then, a server of the DNS may query, according to the RAI, a mapping relationship table of the RAI and an IP address of the SGSN, where the mapping relationship table is stored in the DNS, so as to obtain the IP address of the second SGSN corresponding to the RAI, for example, 10.161.234.254. Then, the DNS may send the IP address to the first SGSN, so that the first SGSN may send a context request message that is used to request for obtaining various information about the MS to the second SGSN corresponding to the IP address.

In a specific implementation process, the context request response message sent to the first SGSN by the second SGSN may include a radio access type (Radio Access Type, RAT for short) information element, where the RAT information element may include the access type information, and the access type information may include a radio access type identity, the length of a radio access type value and the radio access type value. Table 1 is an implementation manner of the access type information, as shown in Table 1,

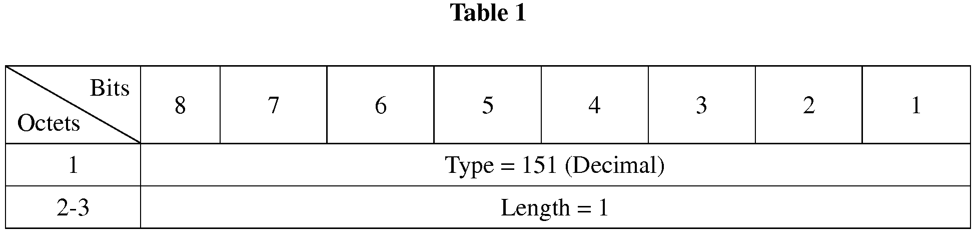

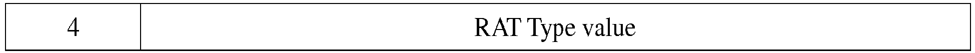

The access type information includes 4 octets, each octet includes 8 bits. The Type of the 1st octet may be set to 151 in decimal, and the Type represents that the information element is a RAT information element; the Length of the 2nd - 3rd octets may be set to 1, which represents that the length of information in the 4th octet is 1 byte, that is, the length of the RAT type value RAT type value is 1 byte. The 4th octet, that is, the RAT type value, represents the access type of the MS in the second SGSN. Table 2 is a lookup table of the access type of the MS in the second SGSN and the RAT type value, as shown in Table 2,

**Table 2**

| RAT Type values | Value(s) (Decimal) |
|---|---|
| <reserved> | 0 |
| UTRAN | 1 |
| GERAN | 2 |
| WLAN | 3 |
| GAN | 4 |
| HSPA Evolution | 5 |

The RAT type value=1 may represent that the access type of the MS in the second SGSN is an UTRAN network; the RAT type value=2 may represent that the access type of the MS in the second SGSN is a GERAN; the RAT type value=3 may represent that the access type of the MS in the second SGSN is a wireless local area network (Wireless Local Area Networks, WLAN for short); the RAT type value=4 may represent that the access type of the MS in the second SGSN is a generic access network (Generic Access Network, GAN for short); the RAT type value=5 may represent that the access type of the MS in the second SGSN is a high speed packet access evolution network (High Speed Packet Access Evolution, HSPA Evolution for short). It should be noted that, Either of Table 1 and Table 2 is an implementation manner, and persons of ordinary skill in the art may adopt any manner for implementation as required. The rest 6 - 255 bytes of the RAT Type values may be reserved to represent access types of other networks after network evolution in the future.

The technical solution of the method for obtaining access information according to the present invention is described below in detail with reference to a specific embodiment.

FIG. 2 is a signaling flow chart of another embodiment of a method for obtaining access information according to the present invention. As shown in FIG. 2, the method of this embodiment may include:

Step 201: An MS sends a routing area update request message to a first SGSN.

When the MS detects that an RAI of the MS changes, the MS initiates a routing update. The MS may send a routing area update request Routing Area Update Request message to the first SGSN, that is, a new SGSN through a base station subsystem (Base Station Subsystem, BSS for short). The Routing Area Update Request message may include an RAI of a second SGSN, that is, an old SGSN, and a P-TMSI of the MS in the second SGSN. Optionally, the Routing Area Update Request message may further include an update type Update Type, capability information Classmark of the MS, discontinuous reception parameters DRX parameters, a network capability Network Capability of the MS, and so on.

Step 202: The first SGSN determines that this routing update is an Inter RAU according to the RAI.

For example, the first SGSN may judge whether the RAI included in the Routing Area Update Request message is identical with its own RAI, and if the RAI is identical with its own RAI, the SGSN is not handed over in this routing update, that is, this handover is a handover that is performed under the first SGSN, for example, a cell handover, and this routing update is an Intra RAU; and if the RAI is not identical with its own RAI, the SGSN needs to be handed over in this routing update, that is, this routing is the Inter RAU. If the routing update is the Inter RAU, the routing update request message received by the first SGSN is an inter-SGSN routing update request message.

Step 203: The first SGSN sends a domain name resolution request to a DNS server.

When determining that this routing update is an inter-SGSN routing update, the first SGSN sends the domain name resolution request message to the DNS server, where the domain name resolution request may include the RAI, and the first SGSN obtains address information of the second SGSN by sending the domain name resolution request to the DNS server.

Step 204: After querying and obtaining an IP address corresponding to the RAI of the second SGSN, the DNS server sends the IP address information to the first SGSN.

For example, the RAI may be RAC0001.LAC1234.MNC0000.MCC0460.GPRS, and the DNS server may query a mapping relationship between the RAI and the IP address of the SGSN, where the mapping relationship is stored by the DNS server, to obtain an IP address of the SGSN corresponding to the RAI, for example, 10.161.234.254, and then, the DNS server may send the IP address to the first SGSN, so that the first SGSN may send a context request message that is used to request for obtaining various information about the MS to the second SGSN corresponding to the IP address.

Step 205: The first SGSN sends a context request message to the second SGSN.

The first SGSN may, according to the obtained IP address information of the second SGSN, send a Context Request message to the second SGSN corresponding to the IP address to request the second SGSN to feed back information related to the MS. The Context Request message may include the RAI of the second SGSN and the P-TMSI of the MS in the second SGSN. Optionally, the Context Request message may further include a temporary logical link identifier (Temporary Logical Link Identifier, TLLI for short) and address information of the first SGSN.

Step 206: The second SGSN obtains the information related to the MS according to the P-TMSI, where the information includes access type information of the MS in the second SGSN.

When determining that the context request message includes the P-TMSI, the second SGSN searches for, according to the P-TMSI, the access type information of the MS stored in the second SGSN.

Step 207: The second SGSN sends a context request response Context Response message to the first SGSN, where the Context Response message may include the access type information of the MS in the SGSN, and further, may include other information related to the MS.

The Context Response message sent to the first SGSN by the second SGSN may include a RAT information element, where the RAT information element may include the access type information, and the access type information may include a radio access type identity, the length of a radio access type value, and the radio access type value. Specific implementation may adopt the manners shown in Table 1 and Table 2, and details are not repeated herein.

Up to this point, the first SGSN may obtain the access type information of the MS in the second SGSN through the Context Response message, and thereby may perform subsequent service processing according to the access type information.

The subsequent process executed in this embodiment is the same as a process of implementing the Inter RAU in the prior art, and may include any process of the Inter RAU in the prior art, and details are not repeated herein.

In the method for obtaining access information of this embodiment, the first SGSN, that is, the SGSN that the MS gets access to after the handover, may obtain the access type information of the MS in the old SGSN in time, so that the first SGSN may perform subsequent service processing according to the access type information.

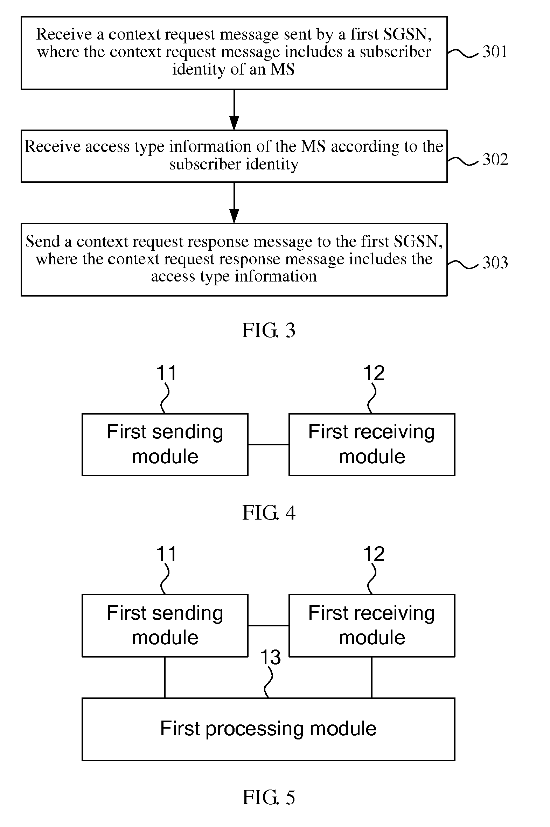

FIG. 3 is a flow chart of an embodiment of a method for sending access information according to the present invention. As shown in FIG. 3, the method of this embodiment may include:

Step 301: Receive a context request message sent by a first SGSN, where the context request message includes a subscriber identity of a mobile station MS.

For example, a second SGSN may receive the context request message sent by the first SGSN.

Specifically, the first SGSN may be a new SGSN that the MS is to get access to, and the second SGSN is an old SGSN that the MS formerly gets access to. When an RA of the MS changes and the MS needs to hand over from the second SGSN to the first SGSN, the MS may send a routing area update request message to the first SGSN, and the first SGSN may send a context request message to the second SGSN after receiving the routing area update request message, where the context request message is used to obtain a PDP context and an MM context of the MS. In the context request message, a subscriber identity of the MS in the second SGSN, that is, in the old SGSN, for example, a P-TMSI, may be included, and in the second SGSN, the subscriber identity uniquely corresponds to the MS.

Step 302: Obtain access type information of the MS according to the subscriber identity.

After receiving the context request message sent by the first SGSN, the second SGSN may, according to the subscriber identity, for example, the P-TMSI, included in the context request message, search for access type information of the MS corresponding to the P-TMSI in the second SGSN. For example, the access type information may be a GERAN network, a UTRAN, and so on, where the access type information of the MS is stored in an SGSN that the MS once got access to (the second SGSN in this embodiment), and when the MS does not completely hand over to the first SGSN, the second SGSN stores the access type information. When the MS completely hands over to the first SGSN, the second SGSN may delete the information related to the MS or not, or perform the deletion when a time of a timer is reached.

Step 303: Send a context request response message to the first SGSN, where the context request response message includes the access type information.

The second SGSN may include the obtained access type information of the MS in the second SGSN in context request response information, and send the context request response information to the first SGSN. Therefore, after receiving the context request response information, the first SGSN may know the access type information of the MS in the second SGSN, and thereby may perform relevant performance measurement according to the access type information, which improves network operation efficiency.

In the method for sending access information of this embodiment, the second SGSN, that is, the old SGSN, may send the access type information of the MS in the old SGSN to the first SGSN, that is, the new SGSN, in time, so that it is convenient for the first SGSN to perform subsequent service processing according to the access type information.

Persons of ordinary skill in the art should understand that all or a part of the steps of the methods according to the embodiments of the present invention may be implemented by a program instructing relevant hardware. The program may be stored in a computer readable storage medium. When the program is run, the steps of the methods according to the embodiments of the present invention are performed. The storage medium may be any medium that is capable of storing program codes, such as a ROM, a RAM, a magnetic disk, an optical disk, and so on.

FIG. 4 is a schematic structural diagram of an embodiment of an SGSN according to the present invention. As shown in FIG. 4, the SGSN of this embodiment may include a first sending module 11 and a first receiving module 12. The first sending module 11 is configured to send a context request message to a second SGSN, where the context request message includes a subscriber identity of a mobile station MS. The first receiving module 12 is configured to receive a context request response message fed back by the second SGSN, where the context request response message includes access type information of the MS in the second SGSN, and the access type information of the MS in the second SGSN is obtained by the second SGSN according to the subscriber identity.

An implementation principle of the SGSN of this embodiment is the same as that of the method embodiment shown in FIG. 1, and details are not repeated herein.

The SGSN of this embodiment, that is, an SGSN that the MS gets access to after a handover, may obtain the access type information of the MS in an old SGSN, so that the SGSN of this embodiment may perform subsequent service processing according to the access type information.

FIG. 5 is a schematic structural diagram of another embodiment of an SGSN according to the present invention. As shown in FIG. 5, based on the SGSN shown in FIG. 4, in the SGSN of this embodiment, further, the first receiving module 12 may further be configured to receive a routing area update request message sent by the MS, where the routing area update request message includes the subscriber identity and the routing area identity information RAI of the MS in the second SGSN. Moreover, the SGSN of this embodiment further includes a first processing module 13. The first processing module 13 is configured to determine that the routing area update request message is an inter-SGSN routing update request message according to the RAI, and obtain address information of the second SGSN through domain name resolution. The first sending module 11 is specifically configured to send the context request message to the second SGSN according to the address information.

An implementation principle of the SGSN of this embodiment is the same as that of the method embodiment shown in FIG. 2, and details are not repeated herein.

The SGSN of this embodiment, that is, an SGSN that the MS gets access to after a handover, may obtain the access type information of the MS in an old SGSN, so that the SGSN of this embodiment may perform subsequent service processing according to the access type information.

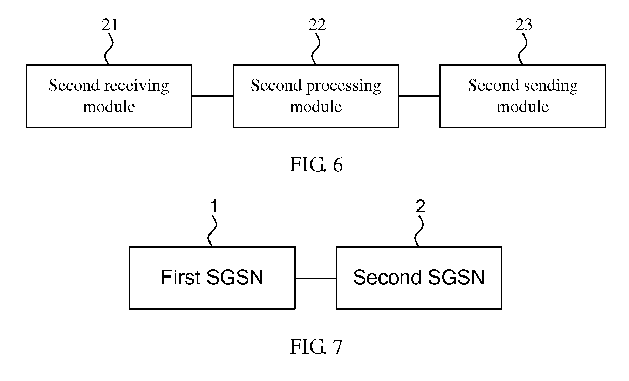

FIG. 6 is a schematic structural diagram of still another embodiment of an SGSN according to the present invention. As shown in FIG. 6, the SGSN of this embodiment may include a second receiving module 21, a second processing module 22, and a second sending module 23. The second receiving module 21 is configured to receive a context request message sent by a first SGSN, where the context request message includes a subscriber identity of a mobile station MS. The second processing module 22 is configured to obtain access type information of the MS according to the subscriber identity. The second sending module 23 is configured to send a context request response message to the first SGSN, where the context request response message includes the access type information.

An implementation principle of the SGSN of this embodiment is the same as that of the method embodiment shown in FIG. 3, and details are not repeated herein.

The SGSN of this embodiment, that is, an old SGSN, may send the access type information of the MS in the old SGSN to a new SGSN that the MS gets access to after a handover, so that it is convenient for the new SGSN to perform subsequent service processing according to the access type information.

FIG. 7 is a schematic structural diagram of an embodiment of a system for processing access information according to the present invention. The system of this embodiment may include a first SGSN 1 and a second SGSN 2. The first SGSN 1 is configured to send a context request message to the second SGSN 2, where the context request message includes a subscriber identity of a mobile station MS; and receive a context request response message sent by the second SGSN 2, where the context request response message includes access type information of the MS in the second SGSN 2, and the access type information of the MS in the second SGSN 2 is obtained by the second SGSN 2 according to the subscriber identity. The second SGSN 2 is configured to receive the context request message sent by the first SGSN 1, where the context request message includes the subscriber identity of the MS; obtain the access type information of the MS according to the subscriber identity; and send a context request response message to the first SGSN 1, where the context request response message includes the access type information.

In this embodiment, an implementation principle of the first SGSN 1 may adopt the implementation principle of the method embodiment shown in FIG. 1 or FIG. 2, a structure of the first SGSN 1 may adopt the structure shown in FIG. 4 or FIG. 5, an implementation principle of the second SGSN 2 may adopt the implementation principle of the method embodiment shown in FIG. 3, and a structure of the second SGSN 2 may adopt the structure shown in FIG. 6, and details are not repeated herein.

In the system of this embodiment, the second SGSN, that is, an old SGSN, may send the access type information of the MS in the old SGSN to the first SGSN, that is, a new SGSN, in time, so that the first SGSN may perform subsequent service processing according to the access type information.

Finally, it should be noted that the foregoing embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in each of the foregoing embodiments, or equivalent replacements can be made to some technical features in the technical solutions, as long as such modifications or replacements do not depart from the idea and scope of the present invention.

## Claims

1. A method for obtaining access information, comprising:
sending a context request message to a second serving general packet radio service support node SGSN, wherein the context request message comprises a subscriber identity of a mobile station MS; and
receiving a context request response message sent by the second SGSN, wherein the context request response message comprises access type information of the MS in the second SGSN, and the access type information of the MS in the second SGSN is obtained by the second SGSN according to the subscriber identity.

2. The method for obtaining access information according to claim 1, wherein before the sending the context request message to the second SGSN, the method further comprises:
receiving a routing area update request message sent by the MS, wherein the routing area update request message comprises the subscriber identity and a routing area identity RAI of the second SGSN.

3. The method for obtaining access information according to claim 2, wherein the sending the context request message to the second SGSN comprises:
determining that the routing area update request message is an inter-SGSN routing update request message according to the RAI, and obtaining address information of the second SGSN through domain name resolution; and
sending the context request message to the second SGSN corresponding to the address information of the second SGSN according to the address information.

4. The method for obtaining access information according to any one of claims 1 to 3, wherein the access type information comprises a radio access type identity, length of a radio access type value, and the radio access type value.

5. A method for sending access information, comprising:
receiving a context request message sent by a first serving general packet radio service support node SGSN, wherein the context request message comprises a subscriber identity of a mobile station MS;
obtaining access type information of the MS according to the subscriber identity; and
sending a context request response message to the first SGSN, wherein the context request response message comprises the access type information.

6. A serving general packet radio service support node SGSN, comprising:
a first sending module, configured to send a context request message to a second SGSN, wherein the context request message comprises a subscriber identity of a mobile station MS;
a first receiving module, configured to receive a context request response message sent by the second SGSN, wherein the context request response message comprises access type information of the MS in the second SGSN, and the access type information of the MS in the second SGSN is obtained by the second SGSN according to the subscriber identity.

7. The SGSN according to claim 6, wherein the first receiving module is further configured to receive a routing area update request message sent by the MS, and the routing area update request message comprises the subscriber identity and a routing area identity RAI of the second SGSN.

8. The SGSN according to claim 7, further comprising:
a first processing module, configured to determine that the routing area update request message is an inter-SGSN routing update request message according to the RAI, and obtain address information of the second SGSN through domain name resolution; and
the first sending module, configured to send the context request message to the second SGSN according to the address information.

9. A serving general packet radio service support node SGSN, comprising:
a second receiving module, configured to receive a context request message sent by a first SGSN, wherein the context request message comprises a subscriber identity of a mobile station MS;
a second processing module, configured to obtain access type information of the MS according to the subscriber identity; and
a second sending module, configured to send a context request response message to the first SGSN, wherein the context request response message comprises the access type information.

10. A system for processing access information, comprising a first serving general packet radio service support node SGSN and a second SGSN, wherein
the first SGSN is configured to send a context request message to a second SGSN, wherein the context request message comprises a subscriber identity of a mobile station MS; and receive a context request response message sent by the second SGSN, wherein the context request response message comprises access type information of the MS in the second SGSN, and the access type information of the MS in the second SGSN is obtained by the second SGSN according to the subscriber identity; and
the second SGSN is configured to receive the context request message sent by the first SGSN, wherein the context request message comprises the subscriber identity of the MS; obtain the access type information of the MS according to the subscriber identity; and send a context request response message to the first SGSN, wherein the context request response message comprises the access type information.
